# EUROPEAN PATENT SPECIFICATION

(11) **EP 3 417 980 B1**
(45) Date of publication and mention of the grant of the patent: **10.09.2025**
(21) Application number: 17752863.5
(22) Date of filing: 16.01.2017
(51) Int. Cl.: B23K 20/227, B23K 103/02, B23K 103/08, B23K 35/00, C23C 10/00, C22C 9/00, C22C 23/00, B23K 20/24, B32B 15/01, B23K 103/18, B23K 20/02, C22C 19/05, C22C 22/00

(54) **METHOD FOR PRODUCING NANO-COMPOSITE METAL MEMBER AND METHOD FOR JOINING PHASE-SEPARATED METAL SOLIDS**
VERFAHREN ZUR HERSTELLUNG EINES NANOVERBUNDMETALLELEMENTS UND VERFAHREN ZUM VERBINDEN VON PHASENGETRENNTEN METALLFESTSTOFFEN
PROCÉDÉ DE PRODUCTION D'ÉLÉMENT MÉTALLIQUE NANOCOMPOSITE ET PROCÉDÉ DE LIAISON DE SOLIDES MÉTALLIQUES À PHASES SÉPARÉES

(30) Priority: 16.02.2016 JP 2016026732
(43) Date of publication of application: 26.12.2018
(73) Proprietor: Tohoku Techno Arch Co., Ltd., Sendai-shi, Miyagi 980-0845 (JP); TPR Co., Ltd., Tokyo 100-0005 (JP)
(72) Inventor: WADA, Takeshi, Sendai-shi Miyagi 980-8577 (JP); KATO, Hidemi, Sendai-shi Miyagi 980-8577 (JP)
(74) Representative: Winter, Brandl - Partnerschaft mbB
(86) International application number: PCT/JP2017/001155
(87) International publication number: WO 2017/141599

(56) References cited:
- JP-A- 2006 007 282
- JP-A- 2010 029 871
- JP-A- 2014 188 536
- JP-A- 2015 196 178
- JP-A- 2015 196 178
- US-A- 3 066 392
- US-A1- 2015 097 300

## Description

### BACKGROUND OF THE INVENTION

### Field of the Invention

The present invention relates to a method for producing a nano-composite metal member and a method for joining phase-separated metal solids.

### Description of the Related Art

A conventional method for producing a nano-composite metal material using heat involves a step of mixing a plurality of materials to be used, and melting the materials by heating them to the melting point or higher of at least one of the materials (for example, see Patent Literature 1).

Conventionally, the present inventors have developed, namely, a molten metal refining method as a method for producing a porous metal member. This method involves immersing a metal material comprising a compound, an alloy, or a nonequilibrium alloy that simultaneously contains a second component and a third component having a positive heat of mixing and a negative heat of mixing, respectively, relative to a first component and having a melting point higher than the solidifying point of a metal bath comprising the first component in a molten metal bath that is controlled to have a temperature lower than the lowest liquidus temperature over the range of compositional variation, in which the third component is decreased so that the metal material is mainly composed of the second component, thereby selectively eluting the third component in the molten metal bath and thus obtaining a metal member having microgaps (for example, see Patent Literature 2). According to the molten metal refining method, a porous body made of the metal material having nanometer-sized microgaps can be readily produced.

Furthermore, Patent Literature 3 discloses a method for producing a metal laminate.

Furthermore, it has been reported that when solid Ni and solid Mg are brought into contact with each other and heat treatment is performed to conduct an interfacial reaction between different solid metals, interdiffusion takes place between Ni and Mg, and then a compound comprising Mg₂Ni is formed in the interface part(for example, see Non Patent Literature 1).

### Citation List

### Patent Literature

Patent Literature 1: Japanese Patent No. 4287461
Patent Literature 2: International Publication WO2011/092909
Patent Literature 3: Japanese Patent Application JP2015196178

### Non Patent Literature

Non Patent Literature 1: M. Y. Tsai, M. H. Chou and C. R. Kao, "Interfacial reaction and the dominant diffusing species in Mg-Ni system", Journal of Alloys and Compounds, 5 March 2009, 471, p.90-92

### SUMMARY OF THE INVENTION

### Technical Problem

The method for producing a nano-composite metal material according to Patent Literature 1 is problematic in that melting is performed by heating to the melting point or higher of at least one material, which results in an increased cost of heating to such a melting point or higher and an increased cost of equipment for handling molten metal. The method is also problematic in that handling of molten metal leads to increased labor and the like and complicated production processes.

The present invention has been achieved noting such problems and an objective of the present invention is to provide a method for producing a nano-composite metal member, by which a nano-composite metal member can be readily produced, and the production cost can be reduced, and a method for joining phase-separated metal solids using the same principle.

### Solution to Problem

To achieve the above objective, the method for producing a nano-composite metal member according to the present invention comprises bringing a solid metal body comprising a first component into contact with a solid metal material comprising a compound, an alloy or a non-equilibrium alloy that simultaneously contains a second component and a third component having a positive heat of mixing and a negative heat of mixing, respectively, relative to the first component, and then performing heat treatment at a predetermined temperature for a predetermined length of time, so as to cause interdiffusion between the first component and the third component.

The method for producing a nano-composite metal member according to the present invention is based on a metallurgic technique focusing on the properties whereby when a solid metal body is brought into contact with a solid metal material comprising a compound, an alloy or a non-equilibrium alloy, and then heat treatment is performed, interdiffusion takes place so that a third component is diffused from the metal material into the metal body and a first component is diffused from the metal body into the metal material depending on the heat of mixing relative to the first component of the metal body. In the interdiffusion process, the second component has a positive heat of mixing relative to the first component, and thus is not diffused to the metal body side. Accordingly, a co-continuous-structured nano-composite metal member can be produced, in which portions comprising the first component and the third component and portions comprising the second component are intertwined with each other in nanometer order in the metal material.

The method for producing a nano-composite metal member according to the present invention does not require heating to the melting point or higher of a metal body or a metal material to be used herein because of the use of interdiffusion between solids, and does not generate any molten metal during the production processes. Accordingly, compared to cases in which melting is performed, the heating cost can be reduced and neither facility nor labor is required for handling molten metal. As described above, the method for producing a nano-composite metal member according to the present invention enables a nano-composite metal member to be easily produced and the production cost thereof to be reduced.

Interdiffusion between solids slowly proceeds, compared to elution to a metal bath as described in Patent Literature 2, so that a nano-composite metal member, in which portions comprising a first component and a third component and portions comprising a second component are intertwined with each other more finely, can be produced by the method for producing a nano-composite metal member according to the present invention.

The present invention is defined by the independent claims. Advantageous embodiments are described in dependent claims.

The method for producing a nano-composite metal member according to the present invention varies the temperature and the length of time for heat treatment, so as to be able to change the size of each component of a composite member to be produced. Moreover, since the reaction proceeds from the surface of a metal material due to diffusion of the first component, and heat treatment is stopped in the middle thereof, only the surface of the metal material can be subjected to conjugation, and a nano-composite metal member can be produced only on the surface. Furthermore, a metal material is shaped into any form such as a thin film and a hollow shape, and thus a nano-composite metal member in an arbitrary shape wherein conjugation takes place on the surface or throughout the member can also be produced. A nano-composite metal member can also be produced by performing vapor deposition of a first component on the surface of a metal material, and then heat treatment.

According to the method for producing a nano-composite metal member according to the present invention, when the melting point of the first component on the basis of the absolute temperature is no less than a half of the melting point of the second component on the basis of the absolute temperature, the first component and the second component may be used in an opposite order. In this case, a co-continuous-structured nano-composite metal member can be produced, in which portions comprising the second component and the third component and portions comprising the first component are intertwined with each other in nanometer order in the metal material.

In the method for producing a nano-composite metal member according to the present invention, a first component, a second component, and a third component may be pure elements of a single type or elements of multiple types, respectively. Note that in the present invention, examples of metal components include metalloid elements such as carbon, silicon, boron, germanium, and antimony. Furthermore, the term "heat of mixing" refers to calories (negative heat of mixing) generated or calories (positive heat of mixing) absorbed when 2 or more types of substances are mixed at a constant temperature.

In the method for producing a nano-composite metal member according to the present invention, the heat treatment is performed such that after the metal body is brought into contact with the metal material, the first component and the third component are interdiffused for binding with each other.

In the method for producing a nano-composite metal member according to the present invention, the temperature of the heat treatment is maintained at a temperature that is no less than 50% of the melting point of the metal body on the basis of the absolute temperature. This case can ensure the easy production of a nano-composite metal member having a smaller size in each component.

In the method for producing a nano-composite metal member according to the present invention, for acceleration of interdiffusion, during heat treatment, the solid metal body and the solid metal material are preferably brought into close contact with each other via their polished faces. In particular, the contact face of the metal body, which is to be in contact with the metal material, and the contact face of the metal material, which is to be in contact with the metal body, are subjected in advance to mirror finishing, and then during the heat treatment, the polished contact face of the metal body and the polished contact face of the metal material are preferably brought into close contact with each other.

In the method for producing a nano-composite metal member according to the present invention, the first component consists of Li, Mg, Ca, Cu, Zn, Ag, Pb, Bi, a rare earth metal element, or a mixture that is an alloy or a compound containing any one of them as a major component, the second component consists of any one of Ti, Zr, Hf, Nb, Ta, Cr, V, Mo, W, Fe, Co, Ni, C, Si, Ge, and Sn, or a mixture that is an alloy or a compound containing a plurality of them, and the third component consists of any one of Li, Mg, Ca, Mn, Fe, Co, Ni, Cu, Ti, Zr, Hf, Nb, Ta, Cr, Mo, and W, or a mixture containing a plurality of them. For example, the first component may comprise Mg, the third component may comprise Ni, and the metal material may comprise a Ni-containing alloy.

The method for joining phase-separated metal solids according to the present invention comprises: forming an alloy layer in which a third component having a negative heat of mixing relative to the first component is alloyed on the surface of at least one of a solid first metal body comprising a first component, and, a solid second metal body comprising a second component having a positive heat of mixing relative to the first component; bringing the first metal body into contact with the second metal body so that the alloy layer is sandwiched between the two; and performing heat treatment at a predetermined temperature for a predetermined length of time, so as to cause interdiffusion between the first component and/or the second component, and the third component.

The method for joining phase-separated metal solids according to the present invention can join phase-separated solid metals, which are generally joined with difficulty, through the use of interdiffusion between solids, based on the principle similar to that of the method for producing a nano-composite metal member according to the present invention. The method for joining phase-separated metal solids according to the present invention involves performing heat treatment upon the forming of an alloy layer on the surface of the first metal body, so as to diffuse the third component to the second metal body side, and diffuse the second component to the alloy side, so that finally a co-continuous-structured nanocomposite formation comprising portions that comprise the first component and the third component, and portions that comprise the second component and the third component in the interface of the first metal body and the second metal body is generated. Furthermore, when an alloy layer is formed on the surface of the second metal body, heat treatment is performed to diffuse the third component to the first metal body side and diffuse the first component to the alloy side, and thus finally a co-continuous-structured nanocomposite formation comprising portions that comprise the first component and the third component, and portions that comprise the second component and the third component is generated in the interface of the first metal body and the second metal body.

Moreover, when alloy layers are formed on surfaces of both the first metal body and the second metal body, heat treatment is performed to diffuse the first component and diffuse the second component within the alloy layers, and thus finally a co-continuous-structured nanocomposite formation comprising portions that comprise the first component and the third component and portions that comprise the second component and the third component is generated in the interface of the first metal body and the second metal body. In this manner, the method for joining phase-separated metal solids according to the present invention makes it possible to firmly join such phase separation-based first metal body and second metal body via the co-continuous-structured nanocomposite formation to be generated in the interface of the two.

The method for joining phase-separated metal solids according to the present invention is based on the principle similar to that of the method for producing a nano-composite metal member according to the present invention, and thus can be implemented by a method similar to the method for producing a nano-composite metal member according to the present invention. Furthermore, as a first component, a second component and a third component, the same components as the first component, the second component and the third component to be used in the method for producing a nano-composite metal member according to the present invention can be used.

### Effect of the Invention

According to the present invention, a method for producing a nano-composite metal member, by which a nano-composite metal member can be readily produced, and the production cost can be reduced, and a method for joining phase-separated metal solids using the same principle as that of the former method can be provided.

### BRIEF DESCRIPTION OF THE DRAWINGS

Fig. 1 is a schematic perspective view showing the method for producing a nano-composite metal member of an embodiment of the present invention.
Fig. 2 shows a scanning electron micrograph of a metal body and a metal material after heat treatment, when the heat treatment of the method for producing a nano-composite metal member of an embodiment of the present invention was performed at 460°C for 12 hours, and the results of analyzing each element (Ni, Fe, Cr, and Mg) in a rectangular region by EDX.
Fig. 3 shows (a) a scanning electron micrograph of a metal body and a metal material after heat treatment, (b) an enlarged micrograph of (a) at position A, (c) an enlarged micrograph of (a) at position B, and (d) an enlarged micrograph of (a) at position C, when the heat treatment of the method for producing a nano-composite metal member of an embodiment of the present invention was performed at 460°C for 12 hours.
Fig. 4 shows a transmission electron micrograph when the heat treatment of the method for producing a nano-composite metal member of an embodiment of the present invention was performed at 460°C for 12 hours.
Fig. 5 shows: (a) a scanning electron micrograph of a metal body and a metal material when the heat treatment of the method for producing a nano-composite metal member of an embodiment of the present invention was performed at 480°C for each time length of heat treatment (6 hours, 12 hours, 24 hours, 48 hours, and 72 hours); and (b) a graph showing the relationship between the time for heat treatment and the thickness of the reaction layer, when the heat treatment of the same was performed at 440°C, 460°C, and 480°C.
Fig. 6 is an Arrhenius plot of the rate constant k of the temperature of each heat treatment found in Fig. 5(b).
Fig. 7 shows (a) a scanning electron micrograph of a coil spring made of HASTELLOY C-276, the metal material used in the method for producing a porous member of an embodiment of the present invention, (b) an enlarged micrograph of the surface of the coil spring, and (c) an enlarged micrograph of a portion of (b).
Fig. 8 shows (a) a scanning electron micrograph of the surface of the coil spring, the metal material shown in Fig. 7 and (b) the results of analyzing each element (Ni, Mo, Cr, Fe and W) in the (a) region by EDX.
Fig. 9 shows: (a) a scanning electron micrograph of a cross section of the coil spring, when Mg was deposited by vacuum deposition on the surface of the coil spring, the metal material shown in Fig. 7, and then heat treatment was performed at 460°C for 12 hours according to the method for producing a porous member of an embodiment of the present invention; and (b) an enlarged micrograph of the reaction layer (composite layer) of (a).
Fig. 10 is a schematic perspective view showing the method for joining phase-separated metal solids in an embodiment of the present invention.

### DETAILED DESCRIPTION OF THE PREFERRED EMBODIMENTS

Hereafter, embodiments of the present invention are described below based on drawings with reference to examples.

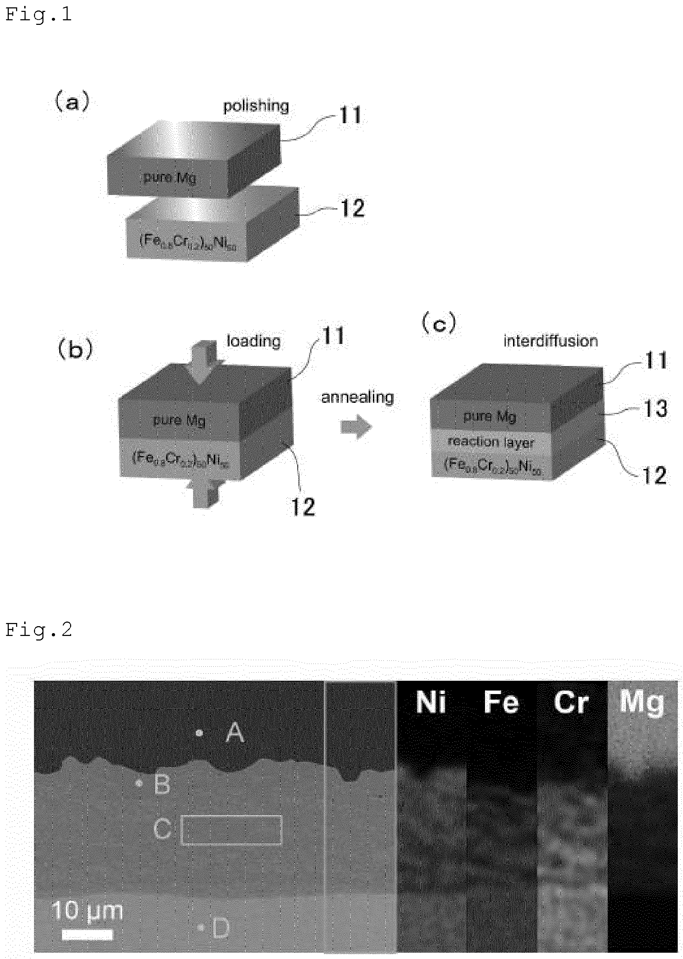

According to the method for producing a nano-composite metal member of an embodiment of the present invention, firstly, as shown in Fig. 1(a), a solid metal body 11 comprising a first component and a solid metal material 12 comprising a compound, an alloy or a non-equilibrium alloy that simultaneously contains a second component and a third component having a positive heat of mixing and a negative heat of mixing, respectively, relative to the first component are used and brought into contact with each other.

In a specific example shown in Fig. 1, pure magnesium (pure Mg) is used as the metal body 11, and (Fe_{0.8}Cr_{0.2})₅₀Ni₅₀ alloy is used as the metal material 12. At this time, the first component is Mg, the second component is Fe_{0.8}Cr_{0.2}, and the third component is Ni. Moreover, the contact face of the metal body 11 and the contact face of the metal material 12 are each polished flat in advance for mirror finishing, and thus are brought into close contact via the contact faces. For mirror finishing, an ion peeling process or the like can be employed.

Next, as shown in Fig. 1(b), a load is applied (loading) to the interface between the metal body 11 and the metal material 12 so as to prevent separation thereof during treatment, and then annealing is performed as heat treatment. Heat treatment is performed by maintaining a temperature corresponding to no less than 50% of the melting point of the metal body 11 on the basis of the absolute temperature. Accordingly, depending on the heat of mixing relative to the first component that is the metal body 11, interdiffusion takes place so that the third component is diffused from the metal material 12 into the metal body 11, and the first component is diffused from the metal body 11 into the metal material 12. The second component of the metal material 12 has positive heat of mixing relative to the first component, so that the second component is not diffused to the metal body 11 side. Therefore, as shown in Fig. 1(c), in the metal material 12, a reaction region (reaction layer) 13, in which portions comprising the first component and the third component and portions comprising the second component are mixed with each other in nanometer order, is obtained, so that a nano-composite metal member can be produced.

In a specific example shown in Fig. 1, the melting point of the metal body 11, Mg, is 650°C (923K). Hence, when heat treatment is performed at about 420°C to 510°C, interdiffusion takes place so that Ni is diffused from the metal material 12 into the metal body 11, and the metal body 11, Mg, is diffused into the metal material 12. The Fe_{0.8}Cr_{0.2} of the metal material 12, is not diffused to the metal body 11 side. In this manner, the reaction layer 13, in which Mg₂Ni comprising Mg and Ni, and portions comprising Fe_{0.8}Cr_{0.2} are mixed with each other in nanometer order in the metal material 12, is obtained, and thus a nano-composite metal member can be produced.

Fig. 2 shows a scanning electron micrograph (SEM) when heat treatment was actually performed at 460°C for 12 hours, and the results of analyzing each element (Ni, Fe, Cr, and Mg) by EDX (energy dispersive X-ray spectrometry). Furthermore, the results of performing composition analysis at positions A to D in Fig. 2 using a transmission electron microscope (TEM) are shown in Table 1. In addition, at the right end of Table 1, the chemical compositions of substances inferred on the basis of the composition analysis are indicated. In Fig. 2, positions A and B are located within a region of the metal body 11 before heat treatment, and positions C and D are located within a region of the metal material 12 before heat treatment.

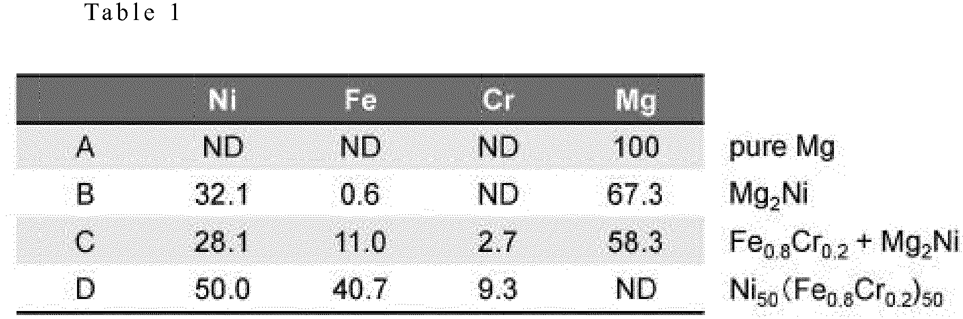

As shown in Fig. 2 and Table 1, it was confirmed that only Mg was present at position A in the metal body 11 distant from the contact face with the metal material 12, and the composition was not changed by heat treatment. It was also confirmed that Mg₂Ni was present at position B in the metal body 11 near the contact face with the metal material 12, and Ni was diffused from the metal material 12 into the metal body 11 by heat treatment, so as to bind with Mg. Furthermore, it was confirmed that Fe_{0.8}Cr_{0.2} and Mg₂Ni were present at position C in the metal material 12 near the contact face with the metal body 11, and Mg was diffused from the metal body 11 into the metal material 12 by heat treatment, so as to bind with Ni. It was also confirmed that Mg was not detected, but (Fe_{0.8}Cr_{0.2})₅₀Ni₅₀ was present at position D in the metal material 12 distant from the contact face with the metal body 11, and the composition was not changed by heat treatment. As described above, it was confirmed that heat treatment caused interdiffusion whereby Ni was diffused from the metal material 12 into the metal body 11, and Mg of the metal body 11 was diffused into the metal material 12, and thus Mg and Ni were bound in the diffusion regions to form Mg₂Ni.

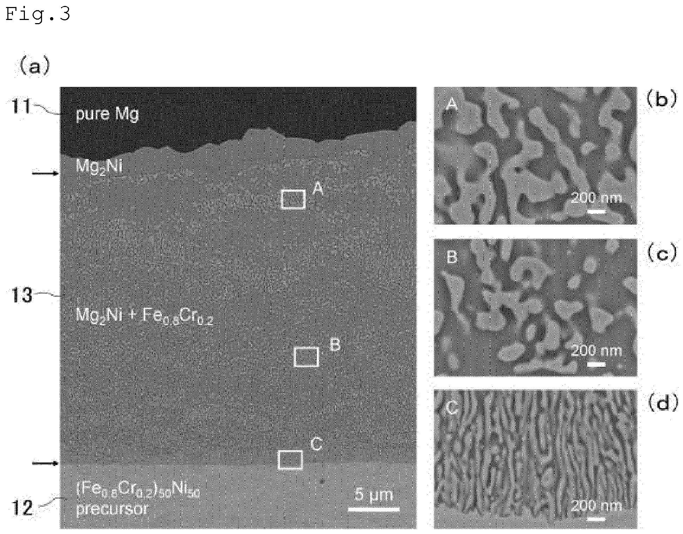

A scanning electron micrograph when heat treatment was similarly performed at 460°C for 12 hours is shown in Fig. 3(a). In addition, enlarged micrographs at each position (A to C) in Fig. 3(a) are shown in Fig. 3(b) to (d). Positions A to C are located in the reaction layer 13 (the region between a pair of arrows on the left edge of Fig. 3(a)) in which the first component, Mg, was diffused, among the regions of the metal material 12 before heat treatment. Position B is located in the neighborhood of the center of the reaction layer 13. Position A is located near the contact face with the metal body 11, the location of which is closer to the contact face than that of Position B. Position C is located in the neighborhood of the dealloying front where Mg is diffused; that is, Position C is located in the neighborhood of the boundary between the reaction layer 13 and regions in which the metal material 12 remains unchanged.

As shown in Fig. 3(b) to (d), it was confirmed within the reaction layer 13 that Mg₂Ni (bright portions in the Figure) and Fe_{0.8}Cr_{0.2} (dark portions in the Figure) were mixed with each other in nanometer order of several hundred nanometers (nm) or less, thereby forming a nano-composite. In particular, it was confirmed in the neighborhood of the dealloying front where the first component, Mg, was diffused, that as shown in Fig. 3(d), Mg₂Ni and Fe_{0.8}Cr_{0.2} in filamentous forms were mixed with each other in nanometer order of 100 nm or less.

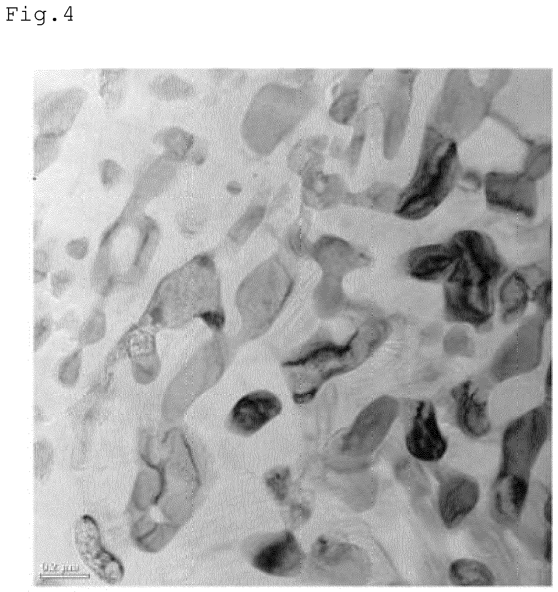

Composition analysis was conducted by TEM to further specifically examine the composition of the nano-composite metal member in the reaction layer 13 in Fig. 3(a). A transmission electron micrograph of the position subjected to composition analysis is shown in Fig. 4. As a result of the composition analysis, the dark portions in Fig. 4 were confirmed to be Fe_{0.819}Cr_{0.172}Ni_{0.009}, and have a composition similar to Fe_{0.8}Cr_{0.2} in which Ni remained to some extent. Moreover, the bright portions in Fig. 4 were confirmed to be a Mg₂Ni intermetallic compound although Fe and Cr were slightly detected. As described above, the nano-composite metal member shown in Fig. 4 was confirmed to be an Fe_{0.819}Cr_{0.172}Ni_{0.009}/Mg₂Ni co-continuous nano-composite metal member.

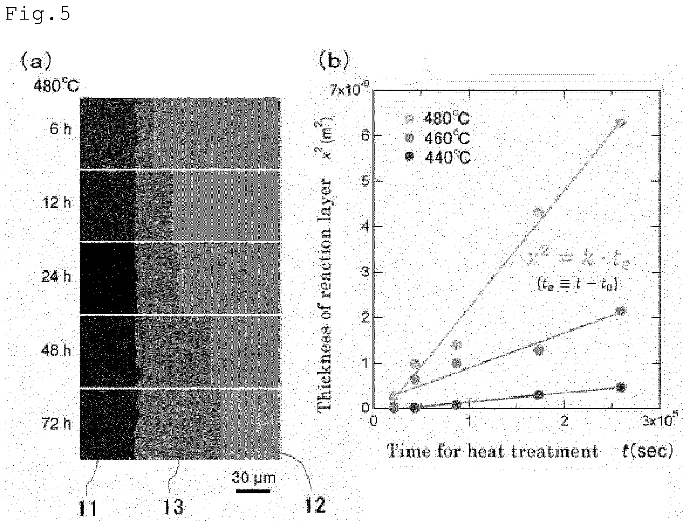

The relationship between the time for heat treatment and the thickness of the reaction layer 13 was examined when heat treatment was performed at 440°C, 460°C, and 480°C, and then shown in Fig. 5. As shown in Fig. 5(a), how the reaction layer 13 was increased as the time for heat treatment passed can be confirmed. Furthermore, as shown in Fig. 5(b), the presence of a relationship represented by x²=k·(t-t₀) between the thickness "x" of the reaction layer 13 and the time "t" for heat treatment was confirmed. Here, "k" indicates the rate constant, and "t₀" indicates the latent time taken for the reaction to start. Moreover, it was confirmed that as the temperature of heat treatment increased, the enlarging rate of the reaction layer 13 increased.

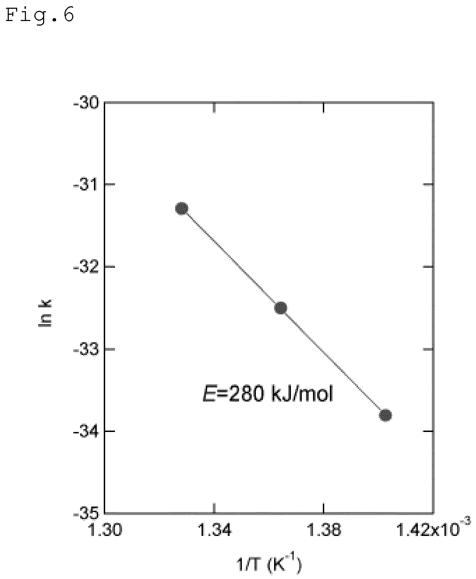

An Arrhenius plot obtained by plotting the rate constant "k" of each temperature of heat treatment found in Fig. 5(b) is shown in Fig. 6. The activation energy E of interdiffusion due to heat treatment, which was found from Fig. 6, was 280 kJ/mol.

### Other Examples

A 30-micron thick Ti₅₀Cu₅₀ (atom%) amorphous ribbon (metal material 12) was pressed at 20 MPa against a mirror-polished Mg plate (metal body 11), the resultant was heated to 480°C; that is, the temperature corresponding to no less than 50% of the melting point of Mg, and then maintained. Therefore, a co-continuous-structured nanocomposite formation comprising portions containing Cu (third component) and Mg (first component) as major components and portions containing Ti (second component) as a major component was formed in the contact interface of the two.

Furthermore, a 1-micron thick Mn₈₅C₁₅ (atom%) alloy thin film (metal material 12) was deposited on a 30-micron thick Ag foil (metal body 11) by a magnetron sputtering technique. The thin film was subjected to heat treatment in an argon atmosphere at 800°C, Mn was diffused from the alloy thin film to the Ag foil side, so that a co-continuous-structured nanocomposite formation comprising portions containing Ag (first component) and Mn (third component) as major components and portions containing C (second component) as a major component was formed in the interface part.

Furthermore, a 1-micron thick Mn₈₅C₁₅ (atom%) alloy thin film (metal material 12) was deposited on the 30-micron thick Cu foil (metal body 11) by a magnetron sputtering technique. The thin film was subjected to heat treatment in an argon atmosphere at 800°C, Mn was diffused from the alloy thin film to the Cu foil side, and thus a co-continuous-structured nanocomposite formation comprising portions containing Cu (first component) and Mn (third component) as major components and portions containing C (second component) as a major component was formed in the interface part.

A (Fe_{0.8}Cr_{0.2})₅₀Nis₅₀ alloy (metal material 12) was pressed at 20 MPa to a 30-micron thick Mg₈₆Ni₉Ca₅ (atom%) metal glass ribbon (metal body 11), and then the temperature was increased to 140°C or more, which is the glass transition temperature of the metal glass ribbon. Therefore, the metal glass ribbon was transformed into a super cooled liquid, and then the viscous flow phenomenon caused the two into contact with no gaps regardless of their surface finishing state. Next, the resultant was heated to and maintained at 450°C that is the temperature corresponding to no less than 50% of the melting point of the Mg₈₆Ni₉Ca₅ alloy. In this manner, a co-continuous-structured nanocomposite formation comprising portions containing Mg (first component) and Ni (third component) as major components and portions containing Fe and Cr (second component) as major components was formed in the contact interface between the two.

As described above, the method for producing a nano-composite metal member of an embodiment of the present invention does not require heating to the melting point or higher of the metal body 11 or the metal material 12 to be used herein because of the use of interdiffusion between solids, and does not generate molten metal in the production processes. Therefore, compared to a case in which melting is performed, the heating cost can be reduced and neither facility nor labor for handling molten metal is required. Accordingly, the method for producing a nano-composite metal member of an embodiment of the present invention can readily produce a nano-composite metal member and can reduce the production cost.

In addition, according to the method for producing a nano-composite metal member of an embodiment of the present invention, a reaction proceeds from the surface of the metal material 12 due to diffusion of the first component, so that conjugation can be caused to take place only on the surface of the metal material 12 by stopping heat treatment in the middle thereof, and a nano-composite metal member can be produced only on the surface. Furthermore, the metal material 12 is formed into any shape such as thin film or hollow shape, and thus a metal member formed in an arbitrary shape, in which conjugation takes place on the surface or throughout the member, can also be produced.

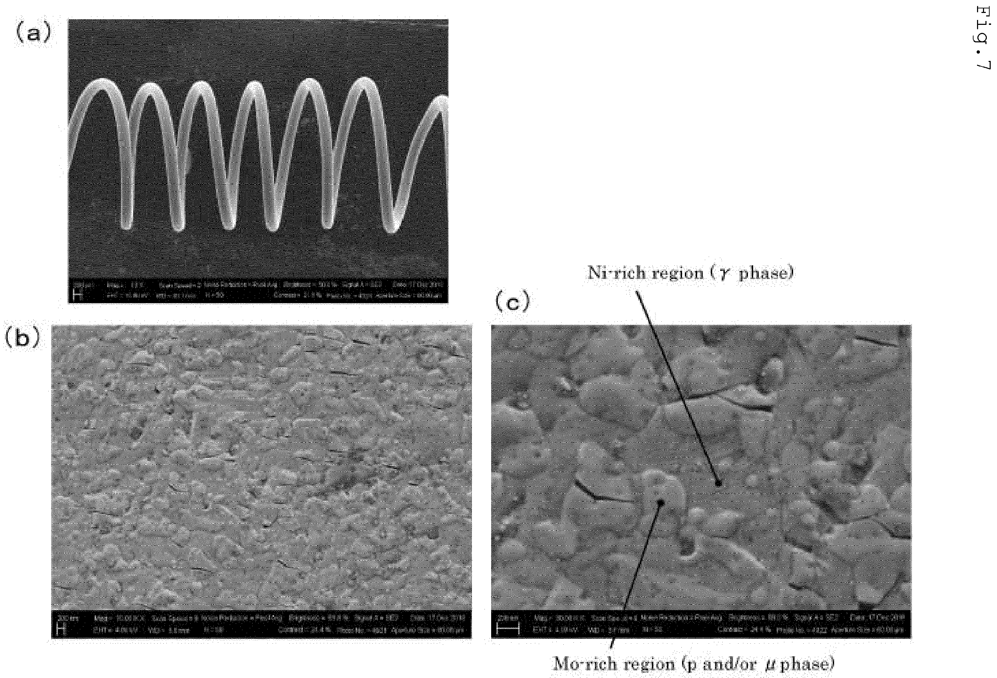

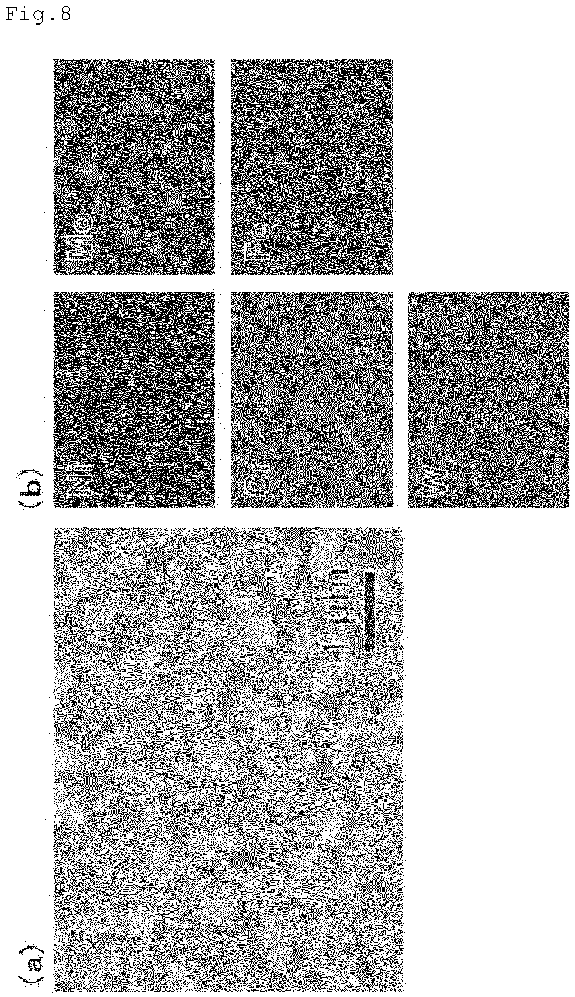

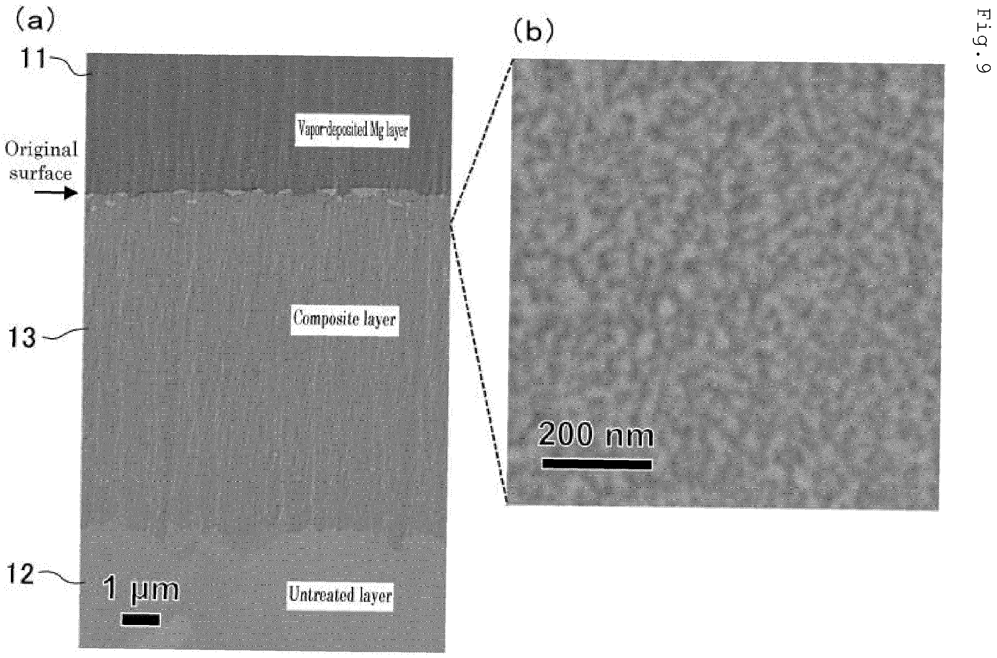

Mg (metal body 11; first component) was deposited by vacuum deposition on the surface of a coil spring (metal material 12) made of HASTELLOY C-276 (Ni₅₇Cr₁₆Mo₁₆W₄Fe₅ (wt%) alloy), and then heat treatment was performed for 12 hours in an Ar gas atmosphere at 460°C at which all compounds in the coil spring and Mg can maintain the solid phase. Scanning electron (SEM) micrographs of the coil spring made of HASTELLOY C-276 before vacuum deposition, and the results of analyzing each element (Ni, Mo, Cr, Fe, W) by EDX (energy dispersive X-ray spectrometry) are shown in Fig. 7 and Fig. 8, respectively. In addition, a scanning electron micrograph of the cross section of the coil spring after heat treatment is shown in Fig. 9.

As shown in Fig. 7 and Fig. 8, the coil spring made of HASTELLOY C-276 was confirmed to be a multiphasic alloy containing a p phase and a µ phase in which Mo (second component) was concentrated, and a γ phase in which Ni (third component) was concentrated. Further, as shown in Fig. 9, it was confirmed that reaction layer 13 was formed in the contact interface between a vapor-deposited Mg layer and the coil spring by heat treatment. Within the reaction layer 13, it was confirmed that the Ni component was selectively diffused (dealloying) from the γ phase into Mg, and a co-continuous-structured nanocomposite formation was formed, in which portions (dark portions in the figure) containing Ni (third component) and Mg (first component) as major components, and portions (bright portions in the figure) in which Mo (second component) was concentrated because of depletion of Ni from the γ phase were mixed in nanometer order.

As described above, according to the method for producing a porous member of an embodiment of the present invention, the steam of the first component was sprayed over the surface of the metal material 12 for adhesion, followed by heat treatment, so that a nano-composite metal member can also be produced. In this case, even if the metal material 12 has a complicated shape, a nano-composite metal member can be relatively readily produced. Therefore, for example, a stent or the like in which conjugation takes place only on the surface can be produced.

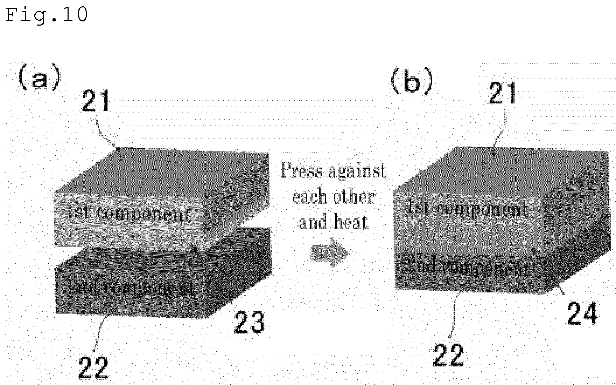

The method for joining phase-separated metal solids of an embodiment of the present invention involves, firstly, as shown in Fig. 10(a), with the use of a solid first metal body 21 comprising a first component, and a solid second metal body 22 comprising a second component having a positive heat of mixing relative to the first component, forming an alloy layer 23 in which a third component having a negative heat of mixing relative to the first component is alloyed on the surface of at least one of the first metal body 21 and the second metal body 22. In a specific example shown in Fig. 10, the alloy layer 23 is formed on the surface of the first metal body 21.

In addition, the alloy layer 23 can be formed by: pasting the third-component metal to the surface of the first metal body 21 and/or the second metal body 22 and then performing heat treatment; or immersing the surface portions of the first metal body 21 and/or the second metal body 22 in a metal bath comprising the third component.

Next, the first metal body 21 and the second metal body 22 are pressed against each other to bring them into contact with each other, so as to sandwich the alloy layer 23 between the metal bodies, and then heat treatment is performed at a predetermined temperature for a predetermined length of time. Heat treatment is performed by maintaining a temperature corresponding to no less than 50% of the melting point of the first metal body 21 based on the absolute temperature. Therefore, as shown in Fig. 10(b), interdiffusion takes place between the first component and/or second component, and the third component, and thus finally a co-continuous structured nanocomposite formation 24 comprising portions that comprises the first component and the third component, and portions that comprises the second component and the third component is generated in the interface of the first metal body 21 and the second metal body 22.

In a specific example shown in Fig. 10, heat treatment is performed, so that the third component is diffused to the second metal body 22 side, and the second component is diffused to the alloy layer 23 side, and thus finally a co-continuous structured nanocomposite formation 24 comprising portions that comprise the first component and the third component, and portions that comprise the second component and the third component is generated in the interface of the first metal body 21 and the second metal body 22.

With the anchor effect of the thus generated co-continuous structured nanocomposite formation 24, the phase-separated first metal body 21 and second metal body 22 can be joined firmly. Therefore, according to the method for joining phase-separated metal solids of an embodiment of the present invention, phase-separated solid metals that are generally joined with difficulty can be joined using interdiffusion between solids based on the principle similar to that of the method for producing a nano-composite metal member of an embodiment of the present invention.

### Reference Signs List

11 Metal body
12 Metal material
13 Reaction layer
21 First metal body
22 Second metal body
23 Alloy layer
24 Co-continuous structured nanocomposite formation

## Claims

1. A method for producing a nano-composite metal member, which comprises:
bringing a solid metal body consisting of a first component into contact with a solid metal material comprising a compound, an alloy or a non-equilibrium alloy that simultaneously contains a second component and a third component having a positive heat of mixing and a negative heat of mixing, respectively, relative to the first component; and
performing heat treatment at a predetermined temperature lower than the melting points of the metal body and the metal material, the temperature corresponding to no less than 50% of the melting point of the metal body on the basis of the absolute temperature, for a predetermined length of time, to thereby cause interdiffusion between the first component and the third component, wherein
the first component consists of Li, Mg, Ca, Cu, Zn, Ag, Pb, Bi, a rare earth metal element, or, a mixture that is an alloy or a compound containing any one of them as a major component,
the second component consists of any one of Ti, Zr, Hf, Nb, Ta, Cr, V, Mo, W, Fe, Co, Ni, C, Si, Ge, and Sn, or, a mixture that is an alloy or a compound containing a plurality thereof,
the third component consists of any one of Li, Mg, Ca, Mn, Fe, Co, Ni, Cu, Ti, Zr, Hf, Nb, Ta, Cr, Mo, and W, or a mixture containing a plurality thereof, and
the negative heat of mixing means calories generated, and the positive heat of mixing means calories absorbed when 2 or more types of substances are mixed at a constant temperature.

2. The method for producing a nano-composite metal member according to claim 1, wherein the heat treatment is performed after the contact of the metal body with the metal material, thereby the first component and the third component are interdiffused and bind with each other.

3. The method for producing a nano-composite metal member according to claim 1 or 2, wherein
the contact face of the metal body with the metal material and the contact face of the metal material with the metal body are mirror-finished in advance, and
during the heat treatment, the contact face of the metal body and the contact face of the metal material are brought into close contact with each other.

4. The method for producing a nano-composite metal member according to any one of claims 1 to 3, wherein
the first component comprises Mg,
the third component comprises Ni, and
the metal material comprises a Ni-containing alloy.

5. A method for producing a nano-composite metal member, which comprises
bringing a solid metal body consisting of a second component into contact with a solid metal material comprising a compound, an alloy or a non-equilibrium alloy that simultaneously contains a first component and a third component, and
performing heat treatment at a predetermined temperature lower than the melting points of the metal body and the metal material, the temperature corresponding to no less than 50% of the melting point of the metal body on the basis of the absolute temperature, for a predetermined length of time to thereby cause interdiffusion between the second component and the third component, wherein
the second component and the third component have a positive heat of mixing and a negative heat of mixing, respectively, relative to the first component, and the melting point of the first component on the basis of the absolute temperature corresponds to no less than a half of the melting point of the second component on the basis of the absolute temperature,
the first component consists of Li, Mg, Ca, Cu, Zn, Ag, Pb, Bi, a rare earth metal element, or, a mixture that is an alloy or a compound containing any one of them as a major component,
the second component consists of any one of Ti, Zr, Hf, Nb, Ta, Cr, V, Mo, W, Fe, Co, Ni, C, Si, Ge, and Sn, or, a mixture that is an alloy or a compound containing a plurality thereof,
the third component consists of any one of Li, Mg, Ca, Mn, Fe, Co, Ni, Cu, Ti, Zr, Hf, Nb, Ta, Cr, Mo, and W, or a mixture containing a plurality thereof, and
the negative heat of mixing means calories generated, and the positive heat of mixing means calories absorbed when 2 or more types of substances are mixed at a constant temperature.

6. A method for joining phase-separated metal solids, comprising:
forming an alloy layer in which a third component having a negative heat of mixing relative to a first component is alloyed on the surface of at least one of a solid first metal body comprising the first component, and a solid second metal body comprising a second component having a positive heat of mixing relative to the first component;
bringing the first metal body into contact with the second metal body to sandwich the alloy layer between the metal bodies; and
performing heat treatment at a predetermined temperature lower than the melting points of the first metal body and the second metal body the temperature corresponding to no less than 50% of the melting point of the first metal body on the basis of the absolute temperature, for a predetermined length of time; and thus causing interdiffusion between the first component and/or the second component, and the third component, wherein
the first component consists of Li, Mg, Ca, Cu, Zn, Ag, Pb, Bi, a rare earth metal element, or, a mixture that is an alloy or a compound containing any one of them as a major component,
the second component consists of any one of Ti, Zr, Hf, Nb, Ta, Cr, V, Mo, W, Fe, Co, Ni, C, Si, Ge, and Sn, or, a mixture that is an alloy or a compound containing a plurality thereof,
the third component consists of any one of Li, Mg, Ca, Mn, Fe, Co, Ni, Cu, Ti, Zr, Hf, Nb, Ta, Cr, Mo, and W, or a mixture containing a plurality thereof, and
the negative heat of mixing means calories generated, and the positive heat of mixing means calories absorbed when 2 or more types of substances are mixed at a constant temperature.

## Patentansprüche

1. Verfahren zum Herstellen eines Nanokomposit-Metallelements, das umfasst:
Bringen eines festen Metallkörpers, der aus einer ersten Komponente besteht, in Kontakt mit einem festen Metallmaterial, das eine Verbindung, eine Legierung oder eine Nichtgleichgewichtslegierung umfasst, die gleichzeitig eine zweite Komponente und eine dritte Komponente enthält, die jeweils eine positive Mischungswärme und eine negative Mischungswärme gegenüber der ersten Komponente aufweisen; und
Durchführen einer Wärmebehandlung bei einer vorbestimmten Temperatur, die niedriger ist als die Schmelzpunkte des Metallkörpers und des Metallmaterials, wobei die Temperatur nicht weniger als 50% des Schmelzpunktes des Metallkörpers auf der Grundlage der absoluten Temperatur entspricht, für eine vorbestimmte Zeitdauer, um dadurch eine Interdiffusion zwischen der ersten Komponente und der dritten Komponente zu bewirken, wobei
die erste Komponente aus Li, Mg, Ca, Cu, Zn, Ag, Pb, Bi, einem Seltenerdmetall oder einer Mischung besteht, die eine Legierung oder eine Verbindung ist, die eines dieser Elemente als Hauptkomponente enthält,
die zweite Komponente aus einem der Elemente Ti, Zr, Hf, Nb, Ta, Cr, V, Mo, W, Fe, Co, Ni, C, Si, Ge und Sn oder einer Mischung besteht, die eine Legierung oder eine Verbindung ist, die eine Vielzahl davon enthält,
die dritte Komponente aus einem der Elemente Li, Mg, Ca, Mn, Fe, Co, Ni, Cu, Ti, Zr, Hf, Nb, Ta, Cr, Mo und W oder einer Mischung, die eine Vielzahl davon enthält, besteht und
die negative Mischungswärme erzeugte Kalorien bezeichnet und die positive Mischungswärme absorbierte Kalorien bezeichnet, wenn 2 oder mehr Arten von Substanzen bei einer konstanten Temperatur gemischt werden.

2. Verfahren zum Herstellen eines Nanokomposit-Metallelements gemäß Anspruch 1, wobei die Wärmebehandlung nach dem Kontakt des Metallkörpers mit dem Metallmaterial durchgeführt wird, wodurch die erste Komponente und die dritte Komponente miteinander diffundieren und sich miteinander verbinden.

3. Verfahren zum Herstellen eines Nanokomposit-Metallelements gemäß Anspruch 1 oder 2, wobei
die Kontaktfläche des Metallkörpers mit dem Metallmaterial und die Kontaktfläche des Metallmaterials mit dem Metallkörper vorab hochglanzpoliert werden und
während der Wärmebehandlung die Kontaktfläche des Metallkörpers und die Kontaktfläche des Metallmaterials in engen Kontakt miteinander gebracht werden.

4. Verfahren zum Herstellen eines Nanokomposit-Metallelements gemäß einem der Ansprüche 1 bis 3, wobei
die erste Komponente Mg umfasst,
die dritte Komponente Ni umfasst und
das Metallmaterial eine Ni-haltige Legierung umfasst.

5. Verfahren zum Herstellen eines Nanokomposit-Metallelements, das umfasst
Bringen eines festen Metallkörpers, der aus einer zweiten Komponente besteht, in Kontakt mit einem festen Metallmaterial, das eine Verbindung, eine Legierung oder eine Nichtgleichgewichtslegierung umfasst, die gleichzeitig eine erste Komponente und eine dritte Komponente enthält, und
Durchführen einer Wärmebehandlung bei einer vorbestimmten Temperatur, die niedriger ist als die Schmelzpunkte des Metallkörpers und des Metallmaterials, wobei die Temperatur nicht weniger als 50% des Schmelzpunktes des Metallkörpers auf der Grundlage der absoluten Temperatur entspricht, für eine vorbestimmte Zeitdauer, um dadurch eine Interdiffusion zwischen der zweiten Komponente und der dritten Komponente zu bewirken, wobei
die zweite Komponente und die dritte Komponente jeweils eine positive Mischungswärme und eine negative Mischungswärme gegenüber der ersten Komponente aufweisen und der Schmelzpunkt der ersten Komponente auf der Grundlage der absoluten Temperatur nicht weniger als der Hälfte des Schmelzpunktes der zweiten Komponente auf der Grundlage der absoluten Temperatur entspricht,
die erste Komponente aus Li, Mg, Ca, Cu, Zn, Ag, Pb, Bi, einem Seltenerdmetall oder einer Mischung besteht, die eine Legierung oder eine Verbindung ist, die eines dieser Elemente als Hauptkomponente enthält,
die zweite Komponente aus einem der Elemente Ti, Zr, Hf, Nb, Ta, Cr, V, Mo, W, Fe, Co, Ni, C, Si, Ge und Sn oder einer Mischung besteht, die eine Legierung oder eine Verbindung ist, die eine Vielzahl davon enthält,
die dritte Komponente aus einem der Elemente Li, Mg, Ca, Mn, Fe, Co, Ni, Cu, Ti, Zr, Hf, Nb, Ta, Cr, Mo und W oder einer Mischung, die eine Vielzahl davon enthält, besteht und
die negative Mischungswärme erzeugte Kalorien bezeichnet und die positive Mischungswärme absorbierte Kalorien bezeichnet, wenn 2 oder mehr Arten von Substanzen bei einer konstanten Temperatur gemischt werden.

6. Verfahren zum Verbinden von phasengetrennten metallischen Feststoffen, umfassend:
Bilden einer Legierungsschicht, in der eine dritte Komponente mit einer negativen Mischungswärme gegenüber einer ersten Komponente auf der Oberfläche mindestens eines festen ersten Metallkörpers, der die erste Komponente umfasst, und eines festen zweiten Metallkörpers, der eine zweite Komponente mit einer positiven Mischungswärme gegenüber der ersten Komponente umfasst, legiert ist;
Bringen des ersten Metallkörpers in Kontakt mit dem zweiten Metallkörper, um die Legierungsschicht zwischen den Metallkörpern einzuschließen; und
Durchführen einer Wärmebehandlung bei einer vorbestimmten Temperatur, die niedriger ist als die Schmelzpunkte des ersten Metallkörpers und des zweiten Metallkörpers, wobei die Temperatur nicht weniger als 50% des Schmelzpunktes des ersten Metallkörpers auf der Grundlage der absoluten Temperatur entspricht, für eine vorbestimmte Zeitdauer; und dadurch Bewirken einer Interdiffusion zwischen der ersten Komponente und/oder der zweiten Komponente und der dritten Komponente, wobei
die erste Komponente aus Li, Mg, Ca, Cu, Zn, Ag, Pb, Bi, einem Seltenerdmetall oder einer Mischung besteht, die eine Legierung oder eine Verbindung ist, die eines dieser Elemente als Hauptkomponente enthält,
die zweite Komponente aus einem der Elemente Ti, Zr, Hf, Nb, Ta, Cr, V, Mo, W, Fe, Co, Ni, C, Si, Ge und Sn oder einer Mischung besteht, die eine Legierung oder eine Verbindung ist, die eine Vielzahl davon enthält,
die dritte Komponente aus einem der Elemente Li, Mg, Ca, Mn, Fe, Co, Ni, Cu, Ti, Zr, Hf, Nb, Ta, Cr, Mo und W oder einer Mischung, die eine Vielzahl davon enthält, besteht, und
die negative Mischungswärme erzeugte Kalorien bezeichnet und die positive Mischungswärme absorbierte Kalorien bezeichnet, wenn 2 oder mehr Arten von Substanzen bei einer konstanten Temperatur gemischt werden.

## Revendications

1. Procédé de production d'un élément métallique nanocomposite, comprenant :
la mise en contact d'un corps métallique solide se composant d'un premier composant avec un matériau métallique solide comprenant un composé, un alliage ou un alliage hors équilibre contenant simultanément un deuxième composant et un troisième composant ayant respectivement une chaleur de mélange positive et une chaleur de mélange négative, par rapport au premier composant ; et
la réalisation d'un traitement thermique à une température prédéterminée inférieure aux points de fusion du corps métallique et du matériau métallique, la température correspondant à pas moins de 50 % du point de fusion du corps métallique sur la base de la température absolue, pendant une durée prédéterminée, de sorte à provoquer une interdiffusion entre le premier composant et le troisième composant, dans lequel
le premier composant comprend Li, Mg, Ca, Cu, Zn, Ag, Pb, Bi, un élément de terre rare, ou un mélange qui est un alliage ou un composé contenant l'un d'entre eux comme composant majeur,
le deuxième composant se compose d'un quelconque parmi Ti, Zr, Hf, Nb, Ta, Cr, V, Mo, W, Fe, Co, Ni, C, Si, Ge et Sn, ou d'un mélange qui est un alliage ou un composé contenant une pluralité de ceux-ci,
le troisième composant se compose d'un quelconque parmi Li, Mg, Ca, Mn, Fe, Co, Ni, Cu, Ti, Zr, Hf, Nb, Ta, Cr, Mo et W, ou d'un mélange contenant une pluralité de ceux-ci, et
la chaleur de mélange négative signifie des calories générées et la chaleur de mélange positive signifie des calories absorbées lorsque 2 types de substances ou plus sont mélangés à une température constante.

2. Procédé de production d'un élément métallique nanocomposite selon la revendication 1, dans lequel le traitement thermique est réalisé après le contact du corps métallique avec le matériau métallique, de sorte que le premier composant et le troisième composant sont interdiffusés et se lient l'un à l'autre.

3. Procédé de production d'un élément métallique nanocomposite selon la revendication 1 ou 2, dans lequel
la face de contact du corps métallique avec le matériau métallique et la face de contact du matériau métallique avec le corps métallique ont préalablement une finition miroir, et
pendant le traitement thermique, la face de contact du corps métallique et la face de contact du matériau métallique sont mises en contact étroit l'une avec l'autre.

4. Procédé de production d'un élément métallique nanocomposite selon l'une quelconque des revendications 1 à 3, dans lequel
le premier composant comprend du Mg,
le troisième composant comprend du Ni, et
le matériau métallique comprend un alliage contenant du Ni.

5. Procédé de production d'un élément métallique nanocomposite, comprenant
la mise en contact d'un corps métallique solide se composant d'un deuxième composant avec un matériau métallique solide comprenant un composé, un alliage ou un alliage hors équilibre contenant simultanément un premier composant et un troisième composant, et
la réalisation d'un traitement thermique à une température prédéterminée inférieure aux points de fusion du corps métallique et du matériau métallique, la température correspondant à pas moins de 50 % du point de fusion du corps métallique sur la base de la température absolue, pendant une durée prédéterminée, de sorte à provoquer une interdiffusion entre le deuxième composant et le troisième composant, dans lequel
le deuxième composant et le troisième composant ont respectivement une chaleur de mélange positive et une chaleur de mélange négative, par rapport au premier composant, et le point de fusion du premier composant sur la base de la température absolue correspond à pas moins la moitié du point de fusion du deuxième composant sur la base de la température absolue,
le premier composant se compose de Li, Mg, Ca, Cu, Zn, Ag, Pb, Bi, d'un élément de terre rare, ou d'un mélange qui est un alliage ou un composé contenant l'un d'entre eux comme composant majeur,
le deuxième composant se compose d'un quelconque parmi Ti, Zr, Hf, Nb, Ta, Cr, V, Mo, W, Fe, Co, Ni, C, Si, Ge et Sn, ou d'un mélange qui est un alliage ou un composé contenant une pluralité de ceux-ci,
le troisième composant se compose d'un quelconque parmi Li, Mg, Ca, Mn, Fe, Co, Ni, Cu, Ti, Zr, Hf, Nb, Ta, Cr, Mo et W, ou d'un mélange contenant une pluralité de ceux-ci, et
la chaleur de mélange négative signifie des calories générées et la chaleur de mélange positive signifie des calories absorbées lorsque 2 types de substances ou plus sont mélangés à une température constante.

6. Procédé d'assemblage de solides métalliques à phases séparées, comprenant :
la formation d'une couche d'alliage dans laquelle un troisième composant ayant une chaleur de mélange négative par rapport à un premier composant est allié sur la surface d'au moins un premier corps métallique solide comprenant le premier composant, et d'un deuxième corps métallique solide comprenant un deuxième composant ayant une chaleur de mélange positive par rapport au premier composant ;
la mise en contact du premier corps métallique avec le deuxième corps métallique pour prendre en sandwich la couche d'alliage entre les corps métalliques ; et
la réalisation d'un traitement thermique à une température prédéterminée inférieure aux points de fusion du premier corps métallique et du deuxième corps métallique, la température correspondant à pas moins de 50 % du point de fusion du premier corps métallique sur la base de la température absolue, pendant une durée prédéterminée ; et de sorte à provoquer une interdiffusion entre le premier composant et/ou le deuxième composant, et le troisième composant, dans lequel
le premier composant se compose de Li, Mg, Ca, Cu, Zn, Ag, Pb, Bi, d'un élément de terre rare, ou d'un mélange qui est un alliage ou un composé contenant l'un d'entre eux comme composant majeur,
le deuxième composant se compose d'un quelconque parmi Ti, Zr, Hf, Nb, Ta, Cr, V, Mo, W, Fe, Co, Ni, C, Si, Ge et Sn, ou d'un mélange qui est un alliage ou un composé contenant une pluralité de ceux-ci,
le troisième composant se compose d'un quelconque parmi Li, Mg, Ca, Mn, Fe, Co, Ni, Cu, Ti, Zr, Hf, Nb, Ta, Cr, Mo et W, ou d'un mélange contenant une pluralité de ceux-ci, et
la chaleur de mélange négative signifie des calories générées et la chaleur de mélange positive signifie des calories absorbées lorsque 2 types de substances ou plus sont mélangés à une température constante.
